# FASCICULE DE BREVET EUROPEEN

(11) **EP 3 546 291 B1**
(45) Date de publication et mention de la délivrance du brevet: **03.08.2022**
(21) Numéro de dépôt: 19164742.9
(22) Date de dépôt: 22.03.2019
(51) Int. Cl.: B60Q 3/76, B60Q 3/60, F21V 5/00, F21V 5/04, F21V 23/04, F21Y 105/12, F21Y 105/14, F21Y 115/10

(54) **SYSTÈME D'ÉCLAIRAGE INTÉRIEUR POUR VÉHICULE AUTOMOBILE**
INNENBELEUCHTUNGSSYSTEM FÜR KRAFTFAHRZEUG
INTERIOR LIGHTING SYSTEM FOR A MOTOR VEHICLE

(30) Priorité: 30.03.2018 FR 1852820
(43) Date de publication de la demande: 02.10.2019
(73) Titulaire: Valeo Vision, 93012 Bobigny Cedex (FR)
(72) Inventeur: FLEURENCE, Thierry, 93012 BOBIGNY Cedex (FR); EZZOUAQ, Kaoutar, 93012 BOBIGNY Cedex (FR); BOIROUX, Nicolas, 93012 BOBIGNY Cedex (FR); RASOLDIER, Nirina, 93012 BOBIGNY Cedex (FR); ROBERT, Arnaud, 93012 BOBIGNY Cedex (FR); XUE, Jingjing, 93012 BOBIGNY Cedex (FR)
(74) Mandataire: Valeo Visibility

(56) Documents cités:
- EP-A1- 2 357 399
- EP-A1- 2 607 164
- EP-A1- 3 208 530
- EP-A1- 3 210 829
- DE-A1-102015 115 579
- US-A1- 2018 087 732

## Description

La présente invention concerne un système d'éclairage intérieur d'un véhicule automobile apte à projeter des faisceaux lumineux pixélisés formant un ensemble de projection d'image pixélisée dans une zone de l'habitacle.

Les dispositifs d'éclairage intérieur actuels intégrés dans l'habitacle d'un véhicule automobile présentent des fonctionnalités restreintes. De manière générale, les dispositifs d'éclairage intérieur se limitent aux lampes intégrées dans le plafonnier pouvant faire office de liseuses ainsi qu'à d'autres sources lumineuses pouvant créer un éclairage d'ambiance, notamment pour mettre en valeur des zones de l'habitacle.

Le document EP 3 210 829 A1 décrit un dispositif d'éclairage intérieur adaptatif comportant deux modules optiques. De tels éclairage adaptatifs sont communs dans le contexte des phares automobiles tels que ceux décrits dans EP 2 607 164 A1.

L'intégration des dispositifs d'éclairage intérieur dans le plafonnier nécessite de prendre en considération les problématiques d'encombrement dans l'habitacle du véhicule, de sorte que le développement de nouvelles fonctionnalités permettant un éclairage intérieur optimisé est limité.

De manière plus générale, dans le domaine de l'éclairage avant des véhicules automobiles, les constructeurs peuvent être amenés à proposer une fonction d'éclairage matriciel pour réaliser, sur une scène de route, une fonction d'éclairage adaptatif dite « ADB » ou « Adaptative Driving Beam » en anglais. De manière connue, un tel dispositif d'éclairage et/ou de signalisation comporte au moins un module optique destiné à émettre longitudinalement vers l'avant du véhicule un faisceau lumineux final segmenté, composé d'une pluralité de faisceaux élémentaires jointifs. Un tel module comporte généralement une matrice de sources lumineuses primaires, une pluralité de guides de lumière et une optique de projection. Chaque source est associée à un guide de lumière destiné à conformer les rayons émis en un pinceau lumineux plus étroit formant un pixel, généralement rectangulaire ou carré. En pilotant individuellement et sélectivement les sources de lumière, il est possible de moduler le faisceau élémentaire projeté vers l'avant qui représente une image de la matrice de sources lumineuses élémentaires, et notamment de faire apparaître dans le faisceau final des zones sombres.

Dans un autre agencement connu, les modules optiques tels que précédemment décrits peuvent être associés à des moyens de réflexion constitués d'au moins un réflecteur de sortie pour générer une imagerie indirecte, par exemple, au moins un miroir plan, concave ou convexe ou une matrice de déviation des rayons de type micro-miroirs. Un tel réflecteur est apte à recevoir et à réfléchir au moins un faisceau lumineux avant sa sortie, le faisceau lumineux étant émis et conformé par une matrice de sources de lumière associées à des guides de lumières puis concentré, dans une première direction, par une optique de projection additionnelle de type lentille. Le réflecteur sert à dévier, relativement à la première direction, le faisceau lumineux dans une seconde direction qui est orientée vers la surface vitrée de sortie du dispositif d'éclairage et/ou de signalisation.

En raison de leur complexité et de leur encombrement, les modules d'éclairage de l'art antérieur sont difficilement intégrables dans l'habitacle d'un véhicule en vue d'une application d'éclairage intérieur.

L'invention s'inscrit dans ce contexte et vise à améliorer la définition des faisceaux d'éclairage intérieur d'un véhicule automobile tout en permettant de diversifier les images projetées dans l'habitacle. A cet effet, l'invention propose un système d'éclairage intérieur en imagerie directe qui est émetteur d'un faisceau lumineux pixélisé facilement modifiable. Par un agencement simplifié et flexible et un encombrement réduit, compatible avec l'espace limité d'un habitacle, le système d'éclairage selon l'invention présente l'avantage de pouvoir multiplier les configurations d'éclairage intérieur tout en assurant une efficacité supérieure.

L'invention a pour objet un système d'éclairage intérieur pour véhicule tel que défini dans la revendication 1 et comportant deux modules optiques, chaque module optique comportant une pluralité de sources lumineuses activables sélectivement, un élément optique primaire comportant des organes primaires agencés respectivement en face de l'une des sources pour collecter les rayons émis par la source correspondante, l'élément optique primaire étant configuré pour former un faisceau élémentaire fonction des rayons émis, et un élément optique secondaire pour la projection du faisceau élémentaire dans une zone de l'habitacle.

Selon l'invention, les modules optiques sont configurés pour que les deux faisceaux élémentaires projetés se superposent au moins partiellement dans ladite zone de l'habitacle.

De préférence, les modules optiques sont agencés de manière à fonctionner en imagerie directe, avec un empilement direct des sources lumineuses et des organes primaires.

Selon l'invention, les modules optiques sont configurés de manière à ce que les deux faisceaux élémentaires projetés qui se superposent au moins partiellement présentent des formes complémentaires, la forme d'un premier faisceau élémentaire étant le négatif de l'autre faisceau élémentaire lorsque toutes les sources lumineuses sont activées.

Selon un mode de réalisation alternatif qui n'est pas selon l'invention, les modules optiques sont configurés de manière à ce que les deux faisceaux élémentaires projetés qui se superposent au moins partiellement présentent des formes complémentaires en ce que, lorsque toutes les sources lumineuses sont activées, les zones éclairées d'un premier faisceau élémentaire se superposent aux zones sombres de l'autre faisceau élémentaire, au moins une zone éclairée du premier faisceau élémentaire s'étendant par ailleurs de manière à recouvrir partiellement au moins une zone éclairée de l'autre faisceau élémentaire voisine de la zone sombre de ce faisceau élémentaire que l'au moins une zone éclairée du premier faisceau élémentaire recouvre.

Selon une série de caractéristiques du système d'éclairage intérieur pouvant être prises seules ou en combinaison, on peut prévoir que :
- les modules optiques présentent respectivement un axe optique et sont agencés de sorte que leurs axes optiques ne sont pas parallèles l'un par rapport à l'autre et convergent l'un vers l'autre,
- les axes optiques des modules optiques sont inclinés l'un par rapport à l'autre d'un angle de valeur comprise entre 0.5° et 3°,
- les axes optiques des modules optiques sont inclinés par rapport à un axe vertical du véhicule d'une valeur d'angle comprise entre 5° et 15°,
- chaque module optique présente un encombrement compris, selon une direction longitudinale parallèle à l'axe optique de ce module optique, entre 15 et 25 millimètres.

Selon une autre série de caractéristiques du système d'éclairage intérieur pouvant être prises seules ou en combinaison, on peut prévoir que :
- les organes primaires et l'élément optique primaire d'au moins un module optique forment une seule et unique pièce,
- les éléments optiques primaires des deux modules optiques forment une seule et unique pièce,
- les éléments optiques secondaires des deux modules optiques forment une seule et unique pièce.

Selon une autre caractéristique du système d'éclairage intérieur, on peut prévoir que les organes primaires d'un premier module optique sont agencés pour former un premier réseau matriciel et les organes primaires d'un deuxième module optique sont agencés pour former un deuxième réseau matriciel, les premier et deuxième réseaux matriciels étant de formes complémentaires.

Selon différentes caractéristiques du système d'éclairage intérieur prises seules ou en combinaison, on peut prévoir que :
- les sources lumineuses sont des diodes électroluminescentes, qui peuvent être aptes à être montées en surface d'une plaque de circuits imprimés,
- les éléments optiques primaire et secondaire sont configurés pour former dans le faisceau élémentaire une image trapézoïdale de chacune des sorties des organes primaires,
- une pluralité d'organes primaires présente une section de forme carrée,
- une pluralité d'organes primaires présente une section de forme ronde.

D'autres caractéristiques et avantages de l'invention apparaitront plus clairement à la lecture de la description détaillée des modes de réalisation de l'invention, donnée ci-après à titre d'exemples illustratifs et non limitatifs et s'appuyant sur les figures annexées, dans lesquelles on a illustré le système d'éclairage intérieur d'un véhicule automobile apte à émettre un faisceau lumineux pixélisé et parmi lesquelles :
- la figure 1 illustre une possibilité d'intégration du système d'éclairage intérieur selon l'invention dans l'habitacle d'un véhicule automobile ;
- la figure 2 est une vue en perspective du système d'éclairage intérieur de l'invention selon un premier agencement des modules optiques composant ce système d'éclairage intérieur ;
- la figure 3 est une vue en perspective arrière du système d'éclairage intérieur de l'invention selon un deuxième agencement des modules optiques composant ce système d'éclairage intérieur, et rendant visible les faisceaux lumineux élémentaires projetés par chacun de ces modules et amenés à se superposer ;
- la figure 4 est une représentation schématique du système d'éclairage intérieur de l'invention, vue de côté pour rendre plus particulièrement visible l'inclinaison l'un par rapport à l'autre des éléments optiques composant les deux modules optiques ;
- et la figure 5 est une vue schématique de la complémentarité de forme de deux faisceaux lumineux élémentaires projetés en sortie des modules optiques composant le système d'éclairage intérieur, et qui selon l'invention se superposent au moins partiellement pour donner une image pixélisée.

Si les figures exposent l'invention de manière détaillée pour sa mise en œuvre, elles peuvent bien entendu servir à mieux définir l'invention le cas échéant. De même, il est rappelé que, pour l'ensemble des figures, les mêmes éléments sont désignés par les mêmes repères. On comprendra également que les modes de réalisation de l'invention illustrés par les figures sont données à titre d'exemple non limitatif. Par conséquent, d'autres configurations du système d'éclairage intérieur selon l'invention peuvent être réalisées, notamment par variations de l'agencement et du dimensionnement des sources lumineuses élémentaires primaires, de l'élément optique primaire en particulier des organes primaires, ainsi que de l'élément optique secondaire.

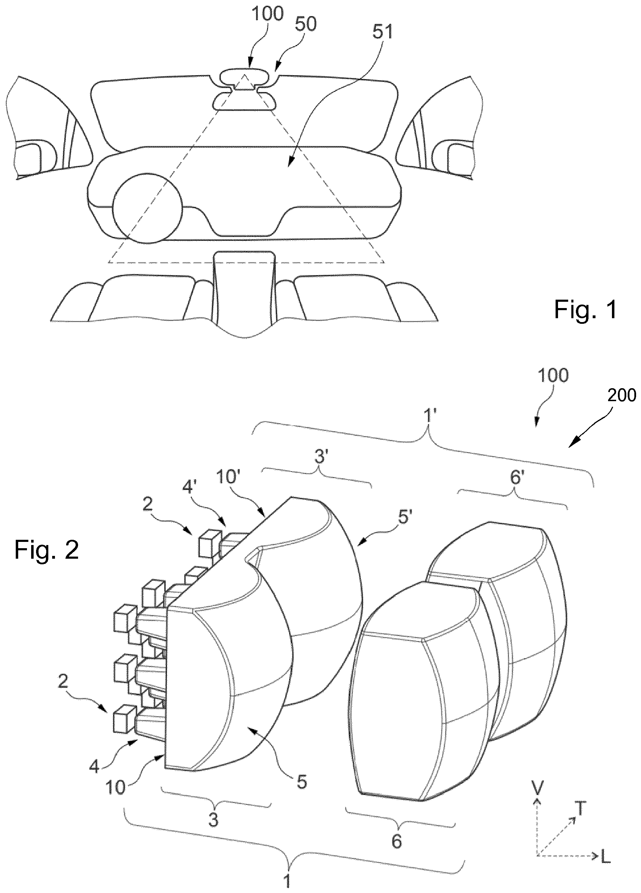

Dans la suite de la description, en se référant notamment aux trièdres L,V,T présents sur les figures 2 à 4, on adoptera à titre non limitatif les orientations :
- longitudinale L, définie par un axe longitudinal d'allongement du système d'éclairage intérieur de l'invention qui permet de définir un agencement d'arrière vers l'avant des éléments qui le composent, en particulier d'une pluralité de sources lumineuses, d'un élément optique primaire et d'un élément optique secondaire ;
- verticale V, en référence à un axe vertical perpendiculaire au sol sur lequel circule le véhicule ; et
- transversale T, en référence à un axe perpendiculaire aux axes longitudinaux et verticaux décrits précédemment dans une direction sensiblement parallèle au sol sur lequel circule le véhicule.

La figure 1 illustre l'implantation d'un système optique 200 dans un habitacle de véhicule automobile pour former un système d'éclairage intérieur 100 qui est configuré pour éclairer l'habitacle dans une application de type liseuse et disposé à cet effet, par exemple, dans le plafonnier 50 avant central du véhicule. Dans cette configuration, le système d'éclairage intérieur 100 est configuré pour projeter des faisceaux lumineux élémentaires se superposant au moins partiellement, tel quel cela va être décrit plus en détail ci-après, pour former au moins une zone d'éclairage 51 pouvant s'étendre sur une surface, par exemple une surface vitrée du véhicule, ou un volume pouvant englober, par exemple, le tableau de bord et l'assise des sièges avant du véhicule.

Il est entendu que toute autre implantation du système d'éclairage intérieur 100 dans l'habitacle est envisageable, par exemple dans un plafonnier arrière central, latéralement au-dessus des portières, par exemple au niveau des poignées de confort, ou encore dans une console centrale avant et/ou arrière.

Tel que cela va être décrit, le système d'éclairage intérieur 100 selon l'invention comporte des sources lumineuses dont l'activation sélective permet de générer des faisceaux élémentaires pouvant varier dans le temps, par leurs périodicités, leurs intensités et/ou leurs couleurs de manière à former, dans au moins une zone de l'habitacle, au moins une image pixélisée nette statique et/ou dynamique telle que, par exemple, une image d'ambiance, un logo ou encore un pictogramme.

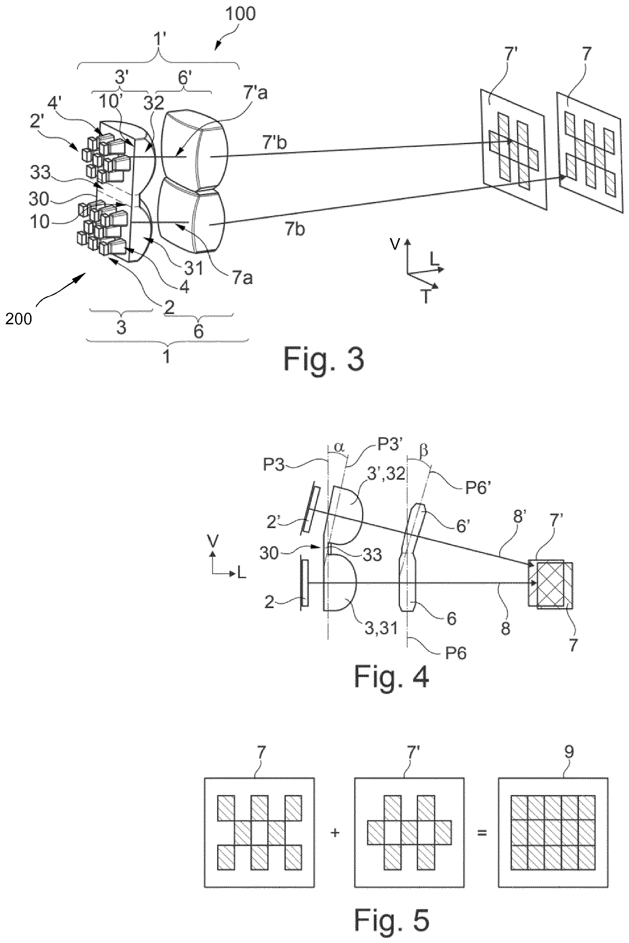

La figure 2 illustre le système optique 200, apte à former ici un système d'éclairage intérieur 100, dans lequel deux modules optiques 1, 1' sont agencés côte à côte, ici selon une direction transversale. Selon l'invention, chaque module optique 1, 1' comporte, de l'arrière vers l'avant le long d'un axe longitudinal, une pluralité de sources lumineuses 2, 2', un élément optique primaire 3, 3' et un élément optique secondaire 6, 6' configurés pour permettre la projection d'un faisceau élémentaire 7, 7' (visibles sur la figure 3) dans une zone de l'habitacle.

L'élément optique primaire 3, 3' comporte une partie arrière dans laquelle sont ménagés des organes primaires 4, 4' agencés respectivement en face des sources lumineuses 2, 2' et une partie avant qui forme une lentille 5, 5'.

Les sources lumineuses 2, 2' sont généralement formées de diodes électroluminescentes aussi dites « LED » montées en surface d'une plaque de circuits imprimés, ici non représentée, et qui peuvent être commandées individuellement. En raison de son application à un habitacle de véhicule automobile, l'espace dédié à l'implantation du système d'éclairage intérieur est limité. Pour cela, il est nécessaire de mettre en œuvre des sources lumineuses de petites dimensions, qui peuvent être par exemple des diodes électroluminescentes de type SMD, acronyme anglais pour « Surface Mounted Device », ou bien des diodes de type COB, acronyme anglais pour « Chip On Board ».

L'élément optique primaire 3, 3', agencé en avant des sources lumineuses 2, 2' de manière à se trouver sur le chemin des rayons émis par ces sources lumineuses, est apte à modifier la distribution de ces rayons émis. A cet effet et tel qu'illustré, les organes primaires 4, 4' ménagés dans la partie arrière de l'élément optique primaire peuvent prendre respectivement la forme d'un guide de lumière, l'ensemble de ces guides de lumière ainsi formés constituant un système optique pixel.

Les guides de lumière s'étendent globalement longitudinalement, en présentant à leurs extrémités longitudinales opposées une face d'entrée des rayons lumineux émis par les sources lumineuses 2, 2' et une face de sortie de ces rayons lumineux. Les guides de lumière peuvent présenter une section de forme carrée, rectangulaire et/ou ronde, étant entendu que la forme des guides de lumière peut être identique ou différente au sein d'un même module optique 1, 1'. Chaque guide de lumière est ainsi couplé à une diode électroluminescente de manière à ce que la majeure partie des rayons lumineux émis par une diode électroluminescente pénètre dans le guide de lumière qui lui est dédié par une face d'entrée de ce guide et soient guidés jusqu'à la face de sortie correspondante d'où les rayons ressortent conformés en un pinceau lumineux plus étroit formant un pixel carré ou rectangulaire ou encore rond.

La lentille 5, 5 formant la partie avant de l'élément optique primaire 3, 3' comporte un dioptre plan d'entrée 10, 10' et une face de sortie de profil sensiblement hémisphérique. Chaque lentille 5, 5' d'un élément optique primaire 3, 3' peut ainsi prendre la forme d'une lentille plan convexe convergente. Les organes primaires 4, 4', chacun formé par un guide de lumière, sont disposés en saillie du dioptre plan d'entrée 10, 10' de sorte que la face de sortie de chaque guide est disposée dans le plan du dioptre plan d'entrée.

Les organes primaires 4, 4' peuvent être réalisés distinctement de l'élément optique primaire 3, 3' formant lentille 5, 5'. Cependant dans un mode de réalisation préféré de l'invention, les organes primaires 4, 4' forment, avec l'élément optique primaire 3, 3' d'au moins un module optique 1, 1', une seule et unique pièce. Dans l'exemple illustré, chaque module 1, 1' comporte un élément optique primaire 3, 3' et des organes primaires 4, 4' réalisés en une même pièce, et les deux éléments optiques primaires 3, 3', et les organes primaires 4, 4' intégrés, peuvent former une seule et unique pièce commune aux deux modules optiques 1,1'.

De la sorte, bien que rendus distincts l'un de l'autre par l'agencement spécifique des guides de lumières qu'ils gèrent et les faisceaux lumineux que l'activation des sources lumineuses qui leur sont propres peut générer, les éléments optiques primaires 3, 3' des modules optiques 1, 1' peuvent former ensemble une seule et unique pièce 30. Dans cette pièce unique, les éléments optiques primaires 3, 3' forment respectivement des première et deuxième zones optiques 31, 32 séparées l'un de l'autre par une zone de liaison 33 optiquement neutre qui est peu ou pas traversée par les rayons émis par les sources lumineuses 2, 2'.

Plus particulièrement, la figure 2 rend particulièrement visible cette zone de liaison 33, sensiblement plane qui sépare les deux zones optiques 31, 32 prenant la forme de lentille sphérique telle que précédemment définie.

La configuration du système d'éclairage intérieur 100, et plus particulièrement la position de l'élément optique primaire 3, 3' qui forme la lentille 5, 5' et de l'élément optique secondaire 6, 6' de projection, est telle que les faces de sortie des guides de lumière ménagés dans le plan du dioptre plan d'entrée 10, 10' sont disposées sensiblement dans le plan focal objet de l'élément optique secondaire 6, 6' de projection.

L'élément optique secondaire 6, 6' de projection forme ici une lentille additionnelle, de préférence biconvexe, et est apte à concentrer en sortie un faisceau élémentaire 7, 7' lumineux adaptatif selon un axe optique 8, 8' (visible sur la figure 3) déterminé en fonction de l'agencement et de l'orientation de cet élément optique secondaire et de l'ensemble des composants optiques du module optique correspondant, en vue de projeter une image des sources lumineuses 2, 2' longitudinalement vers l'avant.

De manière avantageuse, les éléments optiques primaire 3, 3' et secondaire 6, 6' sont configurés pour former dans le faisceau élémentaire 7,7' une image trapézoïdale de chacune des sorties des guides de lumière formant les organes primaires 4, 4'.

Dans l'exemple illustré sur la figure 2, et conformément à ce qui a pu être décrit pour les éléments optiques primaires, les éléments optiques secondaires 6, 6' des deux modules optiques 1, 1' forment une seule et unique pièce, étant entendu que les lentilles additionnelles des éléments optiques secondaires 6, 6' peuvent avoir des configurations optiques et/ou des inclinaisons distinctes l'une de l'autre.

En raison des contraintes d'encombrement précédemment décrites, les dimensions longitudinales du système d'éclairage intérieur qui comporte les deux modules optiques 1, 1' doivent être sensiblement de l'ordre de 20 mm. Pour permettre l'intégration de tous les composants du système d'éclairage intérieur dans cet encombrement, les modules optiques 1, 1' sont agencés de manière à fonctionner en imagerie directe, avec un empilement direct le long de l'axe longitudinal des sources lumineuses 2, 2', des organes primaires 4, 4', des éléments optiques primaires 3, 3' et des éléments optiques secondaires 6, 6'.

Dans une mise en œuvre préférée du système d'éclairage intérieur 100, chaque module optique 1, 1' présente, selon une direction longitudinale parallèle à l'axe optique 8, 8', un encombrement compris entre 15 et 25 mm.

La figure 3 illustre un système d'éclairage intérieur 100 selon l'invention qui comporte un agencement particulier des modules optiques le composant. Plus particulièrement, les deux modules optiques 1, 1' sont ici superposés l'un sur l'autre selon une direction verticale. Cet agencement ne modifie en rien le nombre et la nature des composants des modules optiques 1,1' qui, comme précédemment décrit, comportent chacun, de l'arrière vers l'avant, une pluralité de sources lumineuses 2, 2', un élément optique primaire 3, 3' formant lentille 5, 5' et associé à des organes primaires 4, 4' respectivement en regard d'une des sources lumineuses et un élément optique secondaire 6, 6' formant une lentille additionnelle pour la projection d'un faisceau élémentaire 7, 7' dans une zone de l'habitacle.

Dans cette figure 3, conformément à ce qui a pu être décrit précédemment en relation avec la figure 2, les éléments optiques primaires 3, 3' des modules optiques sont formés d'une seule et même pièce, de même que les éléments optiques secondaires 6 6', et cette figure 3 illustre le fait que les modules optiques peuvent être disposés dans n'importe quelle orientation dès lors que, tel que cela va être décrit ci-après, les éléments optiques primaires et secondaires de chaque module optique sont configurés pour que les faisceaux lumineux élémentaires qu'ils participent à projeter se superposent au moins partiellement.

Par ailleurs, la figure 3 permet une représentation du système optique avec un angle de vue différent de celui de la figure 2, qui permet de mieux voir l'une des différences entre l'un et l'autre des modules, à savoir la disposition des organes primaires en saillie de la face d'entrée de la lentille formant partie de l'élément optique primaire.

Chaque module optique comporte des organes primaires, ou guides de lumière, respectivement en regard d'une source lumineuse et agencés en trois rangées.

Dans le premier module optique 1, huit organes primaires sont arrangés en trois rangées, avec trois organes primaires dans la première rangée, deux organes primaires dans la deuxième rangée, et de nouveau trois organes primaires dans la troisième rangée. Les guides de lumière agencées sur une même rangée sont espacés les uns des autres, avec un écartement transversal, c'est-à-dire selon la direction de la série de guides sur la rangée, sensiblement égal à la dimension transversale d'un guide de lumière au niveau du dioptre plan d'entrée de l'élément optique primaire. Et les guides de lumière sont décalés transversalement d'une rangée à l'autre de manière à présenter une disposition en quinconce, avec un décalage transversal d'une ligne sur deux.

Dans le deuxième module optique 1', sept organes primaires sont arrangés en trois rangées, avec deux organes primaires dans la première rangée, trois organes primaires dans la deuxième rangée, et de nouveau deux organes primaires dans la troisième rangée. Conformément à ce qui a été décrit pour le premier module optique, les guides de lumière agencées sur une même rangée sont espacés les uns des autres, avec un écartement transversal, c'est-à-dire selon la direction de la série de guides sur la rangée, sensiblement égal à la dimension transversale d'un guide de lumière au niveau du dioptre plan d'entrée de l'élément optique primaire. Et les guides de lumière sont décalés transversalement d'une rangée à l'autre de manière à présenter une disposition en quinconce, avec un décalage transversal d'une ligne sur deux.

L'orientation de la figure 3 permet en outre d'illustrer schématiquement les faisceaux lumineux élémentaires projetés, étant entendu que ce qui va être évoqué par suite en relation avec l'agencement des modules optiques de la figure 3 vaut pour les autres agencements et notamment celui illustré sur la figure 2.

On a représenté sur la figure 3, pour chacun des modules optiques 1, 1', le trajet d'un rayon émis par une source lumineuse 2, 2' et amené à traverser successivement un organe primaire 4, 4', la partie avant de l'élément optique primaire 3, 3' associé puis l'élément optique secondaire associé 6, 6'.

Selon l'invention, les modules optiques 1, 1' sont configurés pour que les deux faisceaux lumineux élémentaires 7, 7' projetés en sortie des éléments optiques secondaire 6, 6' se superposent au moins partiellement pour donner, dans une zone de l'habitacle, une image 9 pixélisée illustrée par la figure 5. Pour parvenir à la superposition des faisceaux lumineux élémentaires 7, 7' projetés, les modules optiques 1, 1' sont agencés de manière à ce que leurs axes optiques 8, 8' ne soient pas parallèles l'un par rapport à l'autre et convergent l'un vers l'autre. A cet effet, les lentilles additionnelles des éléments optiques secondaires 6, 6', et/ou les lentilles 5, 5' formant la partie avant des éléments optiques primaires 3, 3', et/ou les éléments optiques primaires dans leur ensemble, peuvent avoir des configurations optiques et/ou des inclinaisons distinctes l'une de l'autre en vue d'assurer une déviation d'au moins un faisceau lumineux élémentaire 7, 7' et parvenir à la convergence des deux faisceaux lumineux élémentaires 7, 7' l'un vers l'autre.

Dans le mode de réalisation illustré, un rayon émis par une première source lumineuse 2 du premier module optique 1 se propage par réflexions successives dans le premier organe primaire 4 agencés en regard de la première source lumineuse, sort du premier élément optique primaire 3 par le dioptre de sortie de la première lentille 5 selon une première direction 7a, en direction du premier élément optique secondaire 6. Ce premier élément optique secondaire 6 formant lentille additionnelle assure, par sa forme et son agencement dans l'habitacle, la déviation du rayon selon une seconde direction 7b, inclinée par rapport à la première direction 7a. L'ensemble des rayons émis par les premières sources lumineuses 2 associées au premier module optique 1 forme ainsi un premier faisceau lumineux élémentaire 7 projeté dans l'habitacle.

De façon similaire, un rayon émis par une deuxième source lumineuse 2' du deuxième module optique 1' se propage par réflexions successives dans le deuxième organe primaire 4' agencés en regard de la deuxième source lumineuse, sort du deuxième élément optique primaire 3' par le dioptre de sortie de la deuxième lentille 5' selon une troisième direction 7'a, en direction du deuxième élément optique secondaire 6'. Ce deuxième élément optique secondaire 6' formant lentille additionnelle assure, par sa forme et son agencement dans l'habitacle, la déviation du rayon selon une quatrième direction 7'b, inclinée par rapport à la troisième direction 7'a. L'ensemble des rayons émis par les deuxièmes sources lumineuses 2' associées au deuxième module optique 1 forme ainsi un deuxième faisceau lumineux élémentaire 7' projeté dans l'habitacle.

On peut définir arbitrairement l'axe longitudinal du système optique comme confondu avec l'axe optique du premier module optique 1. Les composants du premier module optique 1 sont disposés les uns par rapport aux autres pour que les rayons émis par les premières sources lumineuses permettent une projection selon ce premier axe optique sur une zone déterminée de l'habitacle. Au moins un parmi l'élément optique primaire ou l'élément optique secondaire du deuxième module optique présente une inclinaison par rapport à l'élément optique primaire, respectivement l'élément optique secondaire du premier module optique, afin que les rayons émis par les deuxièmes sources lumineuses du deuxième module optique, et donc depuis une position décalée transversalement (figure 2) ou verticalement (figure 3) par rapport à la position de départ prises par les premières sources lumineuses du premier module optique, puissent aboutir à une projection sur la même zone déterminée de l'habitacle.

En d'autres termes, et tel que cela est représenté schématiquement sur la figure 4, donnant cette fois une vue de côté, le deuxième élément optique primaire 3' et/ou le deuxième élément optique secondaire 6' s'étendent principalement dans des plans d'extension P3', P6' inclinés par rapport aux plans d'extension P3, P6 dans lesquels s'étendent respectivement le premier élément optique primaire 3' et/ou le premier élément optique secondaire 6'. Sur la figure 4, à titre d'exemple non limitatif, les plans d'extension des éléments optiques primaires 3, 3' sont inclinés par rapport à l'autre d'un premier angle α et les plans d'extension des éléments optiques secondaires 6, 6' sont inclinés par rapport à l'autre d'un deuxième angle β, étant entendu que l'inclinaison illustrée ici est accentuée pour la rendre perceptible sur la figure.

On comprend que, dans cet exemple de réalisation, le deuxième faisceau élémentaire 7' du deuxième module optique 1', dévié par rapport à l'axe optique 8', converge en direction de l'axe optique 8 et se superpose au faisceau élémentaire 7 du module optique 1 pour créer une image finale pixellisée 9. Dans un mode de réalisation préféré de l'invention, les axes optique 8, 8' des modules optiques 1, 1' sont inclinés l'un par rapport à l'autre d'un angle de valeur comprise entre 0.5° et 3°. En outre, les axes optiques 8, 8' des modules optiques 1, 1' peuvent être inclinés par rapport à un axe vertical du véhicule, sensiblement perpendiculaire au plan principal défini par le toit et/ou le plancher dudit véhicule, d'une valeur d'angle comprise entre 5° et 15°.

Tel que cela a été précisé précédemment, selon une caractéristique de l'invention, les éléments optiques primaires de chacun des modules optiques forment une unique et même pièce. Et il peut en être de même pour les éléments optiques secondaires de chacun des modules optiques. On comprend qu'un tel agencement en une pièce des éléments optiques primaires permet de faciliter le positionnement de ces éléments optiques primaires dans le système optique par rapport aux autres composants. L'opération de montage est simplifiée et rendue moins coûteuse, mais il convient de noter qu'elle permet surtout de s'assurer du bon positionnement du plan d'extension principal d'un élément optique primaire par rapport au plan d'extension de l'autre. De la sorte, et notamment lorsque les éléments optiques secondaires des deux modules optiques sont également réalisés d'une seule pièce, on peut s'assurer de la correcte superposition des faisceaux lumineux élémentaires projetés.

La figure 5 illustre de façon schématique la complémentarité de forme des images des deux faisceaux élémentaires 7, 7' projetés par les éléments optiques secondaires 6, 6' en sortie des modules optiques 1, 1' et qui se superposent au moins partiellement pour créer une image pixélisée finale 9 dans une zone de l'habitacle du véhicule.

A cet effet, les sources lumineuses 2, 2' associées aux guides de lumière formant les organes primaires 4, 4' sont agencées, respectivement, en des premier et deuxième réseaux matriciels, distincts l'un de l'autre mais de formes complémentaires. En d'autres termes, les premiers guides de lumière associés au premier module optique sont agencés en une matrice de X lignes et Y colonnes, ici trois lignes et cinq colonnes, dans laquelle les premiers guides de lumière et les premières sources lumineuses associées prennent des premiers emplacements de la matrice X,Y, et les deuxièmes guides de lumière associés au deuxième module optique sont agencés en une même matrice de X lignes et Y colonnes, ici trois lignes et cinq colonnes dans laquelle les deuxièmes guides de lumière et les deuxièmes sources lumineuses associées prennent des deuxièmes emplacements de la matrice distincts des premiers emplacement correspondants. On peut définir de la sorte la matrice de X lignes et Y colonnes comme un damier, avec la disposition des premiers guides du premier module optique qui correspond à une occupation des cases blanches et la disposition des deuxièmes guides du deuxième module optique qui correspond à une occupation des cases noires complémentaires. On comprend qu'à un premier guide de lumière, agencé sur le premier réseau matriciel et dont l'emplacement est défini par une ligne et une colonne données, correspond un emplacement vide sur le deuxième réseau matriciel.

Il résulte de ce qui précède que, lorsque toutes les sources lumineuses 2, 2' sont activées, la forme du premier faisceau élémentaire 7 qui résulte de l'agencement du premier réseau matriciel des sources lumineuses 2 du premier module optique 1 est le négatif de la forme du deuxième faisceau élémentaire 7' résultant de l'agencement du deuxième réseau matriciel des sources lumineuses 2' du deuxième module optique 1'.

Dans l'exemple illustré et tel que cela est notamment visible sur la figure 5, lorsque toutes les premières sources lumineuses 2 sont allumées, le premier faisceau élémentaire 7 en sortie du premier module optique 1 présente une configuration en damier qui comporte des zones éclairées correspondant aux faces de sortie des guides de lumière des organes primaires 4 et des zones sombres correspondant aux zones localisées entre les faces de sortie. De façon similaire, lorsque toutes les deuxièmes sources lumineuses 2' sont allumées, le deuxième faisceau élémentaire 7' en sortie du deuxième module optique 1' présente une configuration en damier complémentaire en négatif de celui émis par le premier faisceau élémentaire 7.

Il en résulte qu'en sortie du système d'éclairage intérieur 100, dans la zone de l'habitacle sur laquelle sont projetés les deux faisceaux lumineux élémentaires amenés à se superposer, les zones éclairées du premier faisceau élémentaire 7 émis par le premier module optique 1 se superposent aux zones sombres du deuxième faisceau élémentaire 7' émis par le deuxième module optique 1'. Pour éviter que des zones sombres parasites ne subsistent après superposition des faisceaux élémentaires 7, 7' complémentaires ou bien pour éviter toute différence de contraste entre les zones éclairées complémentaires, il est possible d'étendre la surface d'émission d'au moins une zone éclairée du premier faisceau élémentaire 7 de manière à ce qu'elle recouvre partiellement au moins une zone éclairée du deuxième faisceau élémentaire 7' voisine de la zone sombre formant négatif de ladite zone éclairée du premier faisceau élémentaire 7. Par l'agrandissement de la surface d'émission des zones éclairées, l'image finale 9 obtenue par la superposition des faisceaux élémentaires 7, 7' et projetée dans l'habitacle est une image complète, homogène et nette.

Le système optique du système d'éclairage intérieur 100 selon l'invention présente l'avantage d'être flexible. Ainsi, en vue d'augmenter les fonctionnalités d'éclairage dans l'habitacle, il est possible d'agir sur la configuration des faisceaux élémentaires 7, 7' afin de diversifier l'image finale pixellisée 9, notamment en fonction des besoins des utilisateurs du véhicule. A cet effet, on peut prévoir de combiner un premier réseau matriciel d'organes primaires 4 de sections carrées du premier module optique 1 avec un deuxième réseau matriciel d'organes primaires 4' de sections rondes du deuxième module optique 1', ou bien de prévoir des organes primaires de section différentes au sein d'un même réseau matriciel.

En variante, on peut prévoir d'agir sur les sources lumineuses 2, 2', notamment par un pilotage sélectif de celles-ci. En effet, la commande individuelle des sources lumineuses 2, 2', en particulier par un allumage ou une extinction des diodes électroluminescentes, permet des variations de formes, d'intensités lumineuses ou de couleurs des pixels des faisceaux élémentaires 7, 7' et par conséquence de l'image pixélisée finale 9. Ce pilotage ne nécessite aucune modification du système optique selon l'invention et permet de diversifier les fonctions d'éclairage intérieur en projetant dans l'habitacle, par exemple, un logo, un pictogramme ou une image d'ambiance de haute définition.

La description qui précède explique clairement comment l'invention permet d'atteindre les objectifs qu'elle s'est fixée et notamment de proposer un système d'éclairage intérieur simplifié et de faible encombrement qui comporte deux modules optiques aptes à former chacun un faisceau élémentaire pixélisé en vue d'obtenir une image pixélisée projetée dans au moins une zone de l'habitacle. Le système d'éclairage intérieur selon l'invention permet d'améliorer la définition de l'image projetée et d'augmenter les fonctionnalités de l'éclairage intérieur pour véhicule automobile.

L'invention ne saurait se limiter aux modes de réalisation spécifiquement donnés dans ce document car ils sont donnés seulement à titre d'exemples non limitatifs.

## Revendications

1. Système d'éclairage intérieur (100) pour véhicule comportant deux modules optiques (1, 1'), chaque module optique (1, 1') comportant une pluralité de sources lumineuses (2, 2') activables sélectivement, un élément optique primaire (3, 3') comportant des organes primaires (4, 4') agencés respectivement en face de l'une des sources lumineuses (2, 2') pour collecter les rayons émis par la source correspondante, l'élément optique primaire (3, 3') étant configuré pour former un faisceau élémentaire (7, 7') fonction des rayons émis, et un élément optique secondaire (6, 6') pour la projection du faisceau élémentaire (7, 7') dans une zone de l'habitacle,
**caractérisé en ce que** les modules optiques (1, 1') sont configurés pour que les deux faisceaux élémentaires (7, 7') projetés se superposent au moins partiellement dans ladite zone de l'habitacle,
et **en ce que** les modules optiques (1, 1') sont configurés de manière à ce que les deux faisceaux élémentaires (7, 7') projetés qui se superposent au moins partiellement présentent des formes complémentaires, la forme d'un premier faisceau élémentaire étant le négatif de l'autre faisceau élémentaire lorsque toutes les sources lumineuses (2, 2') sont activées.

2. Système d'éclairage intérieur (100) selon la revendication 1, **caractérisé en ce que** les modules optiques (1, 1') sont agencés de manière à fonctionner en imagerie directe, avec un empilement direct des sources lumineuses (7, 7') et des organes primaires (4, 4').

3. Système d'éclairage intérieur (100) selon l'une quelconque des revendications précédentes, **caractérisé en ce que** les modules optiques (1, 1') présentent respectivement un axe optique (8, 8') et sont agencés de sorte que leurs axes optiques (8, 8') ne sont pas parallèles l'un par rapport à l'autre.

4. Système d'éclairage intérieur (100) selon l'une quelconque des revendications précédentes, **caractérisé en ce que** les axes optiques (8, 8') des modules optiques (1, 1') sont inclinés l'un par rapport à l'autre d'un angle de valeur comprise entre 0.5° et 3°.

5. Système d'éclairage intérieur (100) selon l'une quelconque des revendications précédentes, **caractérisé en ce que** les axes optiques (8, 8') des modules optiques (1, 1) sont inclinés par rapport à un axe vertical du véhicule d'une valeur d'angle comprise entre 5° et 15°.

6. Système d'éclairage intérieur selon l'une quelconque des revendications précédentes, **caractérisé en ce que** les organes primaires (4, 4') et l'élément optique primaire (3, 3') d'au moins un module optique (1, 1') forment une seule et unique pièce.

7. Système d'éclairage intérieur (100) selon l'une quelconque des revendications précédentes, **caractérisé en ce que** les éléments optiques primaires (3, 3') des deux modules optiques (1, 1') forment une seule et unique pièce.

8. Système d'éclairage intérieur (100) selon l'une quelconque des revendications précédentes, **caractérisé en ce que** les organes primaires (4) d'un premier module optique (1) sont agencés pour former un premier réseau matriciel et les organes primaires (4') d'un deuxième module optique (1') sont agencés pour former un deuxième réseau matriciel, les premier et deuxième réseaux matriciels étant de formes complémentaires.

## Patentansprüche

1. Innenbeleuchtungssystem (100) für ein Fahrzeug, das zwei optische Module (1, 1') aufweist, wobei jedes optische Modul (1, 1') eine Vielzahl selektiv aktivierbarer Lichtquellen (2, 2'), ein primäres optisches Element (3, 3'), das primäre Organe (4, 4') aufweist, die je gegenüber einer der Lichtquellen (2, 2') angeordnet sind, um die von der entsprechenden Quelle emittierten Strahlen zu sammeln, wobei das primäre optische Element (3, 3') konfiguriert ist, einen Elementarstrahl (7, 7') abhängig von den emittierten Strahlen zu formen, und ein sekundäres optisches Element (6, 6') zur Projektion des Elementarstrahls (7, 7') in einen Bereich des Innenraums aufweist,
**dadurch gekennzeichnet, dass** die optischen Module (1, 1') konfiguriert sind, damit die zwei projizierten Elementarstrahlen (7, 7') sich zumindest teilweise in dem Bereich des Innenraums überlagern,
und dass die optischen Module (1, 1') so konfiguriert sind, dass die zwei projizierten Elementarstrahlen (7, 7'), die sich zumindest teilweise überlagern, komplementäre Formen aufweisen, wobei die Form eines ersten Elementarstrahls das Negativ des anderen Elementarstrahls ist, wenn alle Lichtquellen (2, 2') aktiviert sind.

2. Innenbeleuchtungssystem (100) nach Anspruch 1, **dadurch gekennzeichnet, dass** die optischen Module (1, 1') so eingerichtet sind, dass sie mit direkter Bildgebung funktionieren, mit einer direkten Stapelung der Lichtquellen (7, 7') und der primären Organe (4, 4').

3. Innenbeleuchtungssystem (100) nach einem der vorhergehenden Ansprüche, **dadurch gekennzeichnet, dass** die optischen Module (1, 1') je eine optische Achse (8, 8') aufweisen und so eingerichtet sind, dass ihre optischen Achsen (8, 8') nicht parallel zueinander sind.

4. Innenbeleuchtungssystem (100) nach einem der vorhergehenden Ansprüche, **dadurch gekennzeichnet, dass** die optischen Achsen (8, 8') der optischen Module (1, 1') um einen Winkel eines Werts zwischen 0,5° und 3° zueinander geneigt sind.

5. Innenbeleuchtungssystem (100) nach einem der vorhergehenden Ansprüche, **dadurch gekennzeichnet, dass** die optischen Achsen (8, 8') der optischen Module (1, 1) bezüglich einer senkrechten Achse des Fahrzeugs um einen Winkelwert zwischen 5° und 15° geneigt sind.

6. Innenbeleuchtungssystem nach einem der vorhergehenden Ansprüche, **dadurch gekennzeichnet, dass** die primären Organe (4, 4') und das primäre optische Element (3, 3') mindestens eines optischen Moduls (1, 1') ein einziges Bauteil bilden.

7. Innenbeleuchtungssystem (100) nach einem der vorhergehenden Ansprüche, **dadurch gekennzeichnet, dass** die primären optischen Elemente (3, 3') der zwei optischen Module (1, 1') ein einziges Bauteil bilden.

8. Innenbeleuchtungssystem (100) nach einem der vorhergehenden Ansprüche, **dadurch gekennzeichnet, dass** die primären Organe (4) eines ersten optischen Moduls (1) eingerichtet sind, um ein erstes Matrixnetz zu bilden, und die primären Organe (4') eines zweiten optischen Moduls (1') eingerichtet sind, um ein zweites Matrixnetz zu bilden, wobei die ersten und zweiten Matrixnetze komplementäre Formen haben.

## Claims

1. Interior lighting system (100) for a vehicle comprising two optical modules (1, 1'), each optical module (1, 1') comprising a plurality of selectively activatable light sources (2, 2'); a primary optical element (3, 3') comprising primary members (4, 4'), each arranged to face one of the light sources (2, 2') respectively, for collecting the rays emitted by the corresponding source, the primary optical element (3, 3') being configured to form an elementary beam (7, 7') which is dependent on the rays emitted; and a secondary optical element (6, 6') for projecting the elementary beam (7, 7') into an area of the passenger compartment, **characterized in that** the optical modules (1, 1') are configured so that the two projected elementary beams (7, 7') are at least partially superimposed on one another in said area of the passenger compartment,
and **in that** the optical modules (1, 1') are configured in such a way that the two projected elementary beams (7, 7') which are at least partially superimposed on one another have complementary shapes, the shape of a first elementary beam being the negative of the other elementary beam when all the light sources (2, 2') are activated.

2. Interior lighting system (100) according to Claim 1, **characterized in that** the optical modules (1, 1') are arranged so as to operate in direct imaging mode, with direct stacking of the light sources (7, 7') and the primary members (4, 4').

3. Interior lighting system (100) according to either of the preceding claims, **characterized in that** the optical modules (1, 1') each have a respective optical axis (8, 8') and are arranged so that their optical axes (8, 8') are not parallel to one another.

4. Interior lighting system (100) according to any of the preceding claims, **characterized in that** the optical axes (8, 8') of the optical modules (1, 1') are inclined relative to one another at an angle of between 0.5° and 3°.

5. Interior lighting system (100) according to any of the preceding claims, **characterized in that** the optical axes (8, 8') of the optical modules (1, 1') are inclined relative to a vertical axis of the vehicle at an angle of between 5° and 15°.

6. Interior lighting system according to any of the preceding claims, **characterized in that** the primary members (4, 4') and the primary optical element (3, 3') of at least one optical module (1, 1') form a single piece.

7. Interior lighting system (100) according to any of the preceding claims, **characterized in that** the primary optical elements (3, 3') of the two optical modules (1, 1') form a single piece.

8. Interior lighting system (100) according to any of the preceding claims, **characterized in that** the primary members (4) of a first optical module (1) are arranged to form a first matrix array and the primary members (4') of a second optical module (1') are arranged to form a second matrix array, the first and second matrix arrays having complementary shapes.
